# EUROPEAN PATENT APPLICATION

(11) **EP 1 806 051 A1**
(43) Date of publication of application: **11.07.2007**
(21) Application number: 05785651.0
(22) Date of filing: 26.07.2005
(51) Int. Cl.: A01K 13/00

(54) **AUTOMATIC HYDROMASSAGE MACHINE FOR HOUSEHOLD PETS**

(30) Priority: 30.09.2004 ES 200402332
(71) Applicant: Netwash Aplicaciones Tecnicas del Lavado, S.L., 43120 Constant (ES)
(72) Inventor: VILLA CERVANTES, Francisco, E-43120 Constant (ES)
(74) Representative: Canela Giménez, Teresa
(86) International application number: PCT/ES2005/000417
(87) International publication number: WO 2006/040365

(57) **Abstract**

AUTOMATIC MACHINE FOR HYDROMASSAGING PET ANIMALS, of the type that is provided with a cabin into which the animal is introduced, said machine using both cleaning devices with water and detergent and drying devices, and comprising:
-a frame (2) that accommodates a cabin (1) into which the animal to be cleaned is placed, with a floor formed by an anti-slip grating (12) and an inclined bottom that creates a tank (4) for recycling water
-said cabin (1) having nozzles (3) distributed all over the surface of said cabin (1) from which nozzles (3) water a shampoo are ejected at a controlled temperature and pressure
-said cabin (1) having ventilating duct (5) located at the lower portion of one of its sides and another ventilating duct (12) at the opposite side and at the lower portion of said cabin (1); said cabin (1) having also at the upper portion thereof grated apertures (13), said ducts (5 and 12) and said apertures (13) permitting the existence of a drying air flow all over the cabin (1) at a controlled temperature
-said machine having means for autonomous consumption of tempered water and for recirculation of said water after having been used for washing
-said frame (2) accommodating an electric cabinet (27) having a control microprocessor (44), for instance of the type PLC, that regulates the operation of the machine
-said machine having a touch-sensitive screen (37) and means for data entry by the user, who selects between the different washing programs offered.
-said frame also accommodating all those components, elements, connections and fluid intakes for the operation of the equipment.

## Description

### FIELD OF THE INVENTION

The present invention discloses an automatic machine for hydromassaging pet animals, such as dogs and cats, the user of this machine being capable of selecting the pet animal hydromassage program by means of controls, said machine further having an arrangement of elements that allows convenient washing and efficient drying of the pet with absolutely guaranteed security and hygiene.

### PRIOR ART

It is known the difficulty of cleaning pet animals in houses, said task being normally carried out in the bathtubs, mainly due to the fact that it is hard to restrain said animals. During thrashing with the animal abundant splashing outside the bathtub occurs, which makes the chore of cleaning pet animals so cumbersome that pet owners get discouraged to carry it out with the desirable frequency, this consequently deteriorating the hygiene of said pet animals.

The alternative is to have the animal washed in a pet-shop, which is usually performed manually. The operator straps the animal down and bathes and washes it by hand in a bathtub with the aid of a hose, brushes and dryers. This procedure is time-consuming, very irritant for the animals, which tend to resist being taken to pet animals care centres, and in essence expensive.

In order to overcome these disadvantages different machines for washing pets have been designed, both for household use and for commercial use, the latter machines being more sophisticated and presumably more widely used, and all of them intended to help the user with the task of washing pet animals.

For instance, it is known patent US3884191 to Pansy M. Stout, which discloses an apparatus for washing and drying pet animals using water and soap. It utilizes both an inclined bottom for draining the cleaning fluids and air draughts for drying the animal by means of the same water ducts once water is no longer used. There is provided mechanism adjustable in height and diameter that defines a collar for restraining the animal, whose head sticks out of the housing.

In patent FR2543795 to Daniel Jeandot, it is disclosed a cabin for cleaning and disinfecting pet animals, such as dogs and cats, said cabin being easily mounted and dismounted. Floor height is adjustable, so that the head of the animal can pass through a size-adjustable orifice-collar, thereby restraining the animal, whose head sticks out of the cabin.

The animal's entrance wall is collapsible for facilitating access. The cabin walls are transparent and are provided with orifices having rubber gloves for washing the animal. It is also provided with spray nozzles, dryers and a pump for collecting and eliminating residues through the drain.

Patent US4505229 to Mario Altissimo discloses an automatic cleaning machine in the form of a rigid frame out of which the head of the animal sticks, so that in this manner the animal becomes restrained.

The machine is provided with tubes for the admission of fluids and drying air, and means for evacuating the fluids.

The cabin is provided with an interior area, into which the animal is placed, said cabin having apertures for draining the liquids and for admission of the drying air, and the exterior frame proper of the machine that supports all the mechanisms, tubes, pumps, etc.

Patent FR2753877 to Michael Besnard discloses a structure whose outer frame houses a cabin for pet cleaning pet animals into which the said animals are placed along with the mechanisms and tanks required for its operation.

The animal is untied in the cabin because there is nothing that may harm it, since all the devices are located outside said receptacle. The user can program the apparatus, which is provided with self-cleaning and disinfecting options.

The machine is further provided with both water and residue filters. There is as well some space or window left open for cleaning and drying the animal, said space or window being not open when the self-cleaning of the cabin is being performed.

Drying is carried out by means of a tube propped on a rotating element that receives air from a blower, whilst washing is effected with three nozzles that bathe the animal in different washing operations.

Spanish utility model ES1043452U to Angel Maria Segura is a machine for cleaning, disinfecting and deparasitating animals that is provided with a cleaning chamber for animals that has attached thereto a control camera of the cleaning means. Said machine has a recirculation circuit of the cleaning water and for mixing of said water with lukewarm water.

This machine does not carry out the drying of the animal.

It is provided with a circuit for discharging liquids to the drainage, a window for inspecting the animal or a glass panel set on the side wall, fixed or mobile inner partitions for simultaneously cleaning several animals; the machine is further provided with a safety switch and means for controlling the levels through a PLC and a touch-sensitive screen.

The above-described machines, despite their advantages and achievements can be further improved thanks to the present invention, which provides pet animal hydromassaging, an improved washing and drying of the animal, less water and products consumption, an improved hygiene of the cabin and an enhanced operational security. In short, this machine provides greater placidity and feeling of comfort for the pet animal that is being washed and, finally, since this is an automatic machine that is intended to be manipulated by an unskilled user, it offers a greater ease of use of the different cleaning operations suitable for each need or preference.

It is thereby achieved a more agreeable, less stressful and even more pleasurable washing for the pet animal, thanks to the hydromassage, which partly accounts for the non-existence of struggling between the master and the pet animal that causes the former to space the washing of his/her pet increasingly further apart.

### BRIEF EXPLANATION OF THE DRAWINGS

For a better interpretation of the object of the present invention, it is described below a merely illustrative and non-limiting embodiment that is accompanied by three pages of drawings.

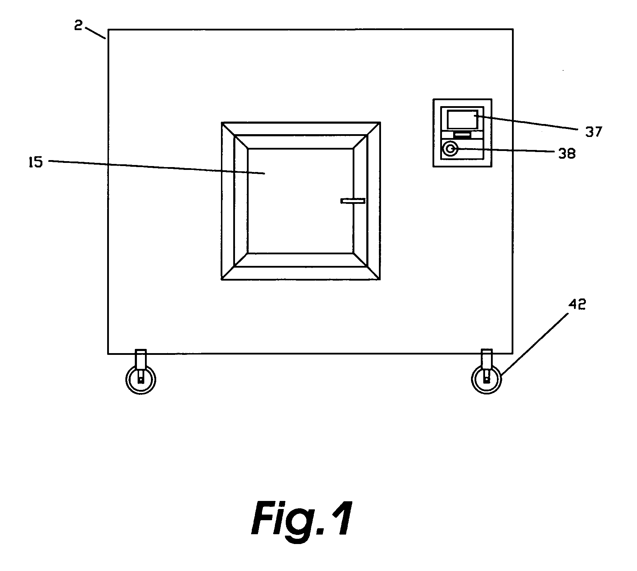

Figure 1 is a front view of the machine of the invention showing the door for the entrance of the animals to the cabin and the window with which said door is provided that permits to see the interior of said machine.

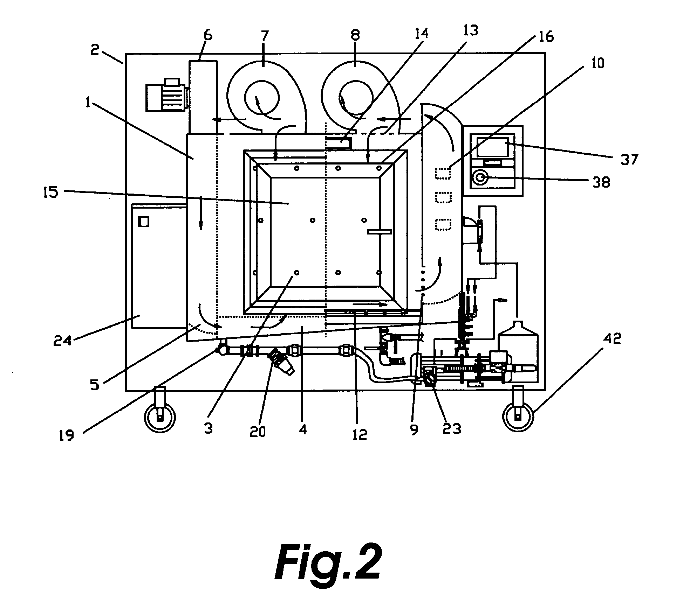

Figure 2 is front elevational view of the machine of the present invention in accordance with its preferred embodiment showing its constituent parts.

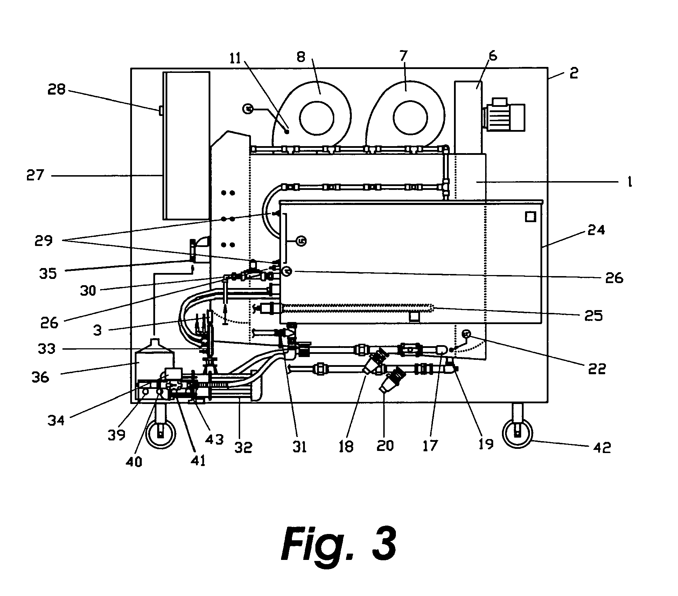

Figure 3 is the same elevational view of figure 1, but this time seen from behind the machine, from a point of view opposed to that of the previous figure.

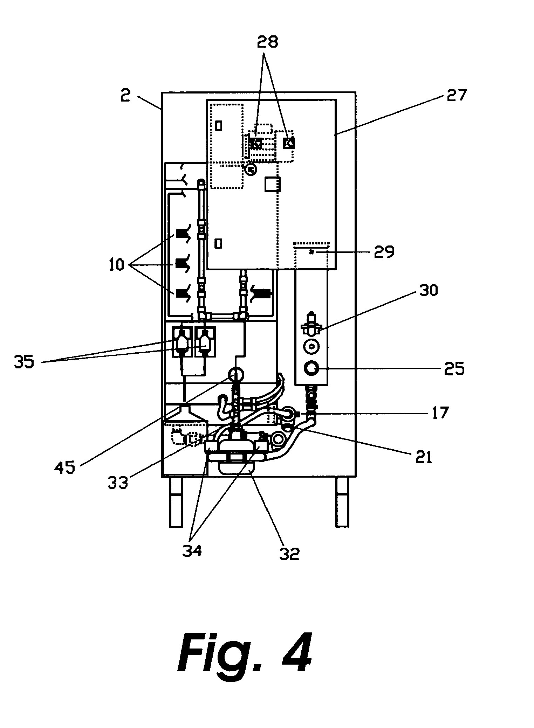

Figure 4 is a side elevational view, also showing the inner parts that comprise the preferred embodiment of the present invention.

### BRIEF DESCRIPTION OF THE INVENTION

The present invention discloses an automatic machine for hydromassaging pet animals, such as dogs and cats, with which the user by means of a touch-sensitive screen can select the desired washing, drying and/or deparasitation option and leaves the machine performing the task of hydromassaging, washing and drying said pet animal without having to intervene at all in said task.

The machine comprises a frame that houses all the mechanisms and connections required for its operation. Inside the machine there is a cleaning cabin into which the pet animal is introduced through a big-sized door that is transparent so that the animal can be observed from the outside and the pet can, in turn, see the exterior for the sake of keeping it calm.

The key for the correct operation of a machine of this type is to carry out a thorough cleaning and drying of the pet in such a way that not only the safety of the animal is safeguarded but also said animal can feel at ease and relaxed with said cleaning, which is achieved by the present invention by providing a cabin for hydromassaging that cleans and dries the pet.

That is achieved thanks to the particular design of the machine of the present invention that provides detergent mixed with sprayed water through some orifices distributed around the entire cabin, so that the animal does not feel attacked because it does not directly receive streams. Water temperature is controlled at all times with the same purpose.

Unlike the prior art, the machine of the present invention does not scare the pet with powerful and excessively hot air streams. Rather, it smoothly and persistently circulates drying air at a programmed and controlled temperature and pressure by way of suitable sensors.

The drying air also flows upwardly, thereby drying the underbelly of the animal, which consequently reduces drying time and helps completing the cleaning operation of the pet well before it begins to get annoyed due to its forced confinement. Said air recirculation is obtained by means of turbines that force that air through some upper and lower apertures made in the cabin where the animal is confined.

There are provided in the machine of the invention means for reusing the cleaning water after having been previously filtered to remove any solid residues such as hairs and parasite rests, for tempering the temperature of said cleaning water and finally for reintroducing it in the flow of water to be used. This represents a saving in water and also the elimination of cabin residues that thanks to this filtering process are sent to the corresponding sewers.

The animal lies on a perforated nonskid grate that allows passage of both the drying air and the detergent dripping onto the inclined floor of the cabin. That permits the formation of a small tank or pail that is used as an intermediate reservoir for collecting residual detergent that redirected by means of pumps for filtering and subsequent reuse.

A microprocessor, for instance of the PLC type, regulates the operation of the machine and controls a touch-sensitive screen by means of which the user actually selects the options available that the machine will thereafter perform.

In this manner it is obtained and automatic machine for washing, drying and deparasitating pets that is easy to use by any user and is, above all, safe, efficient and comfortable for the pets, that are thus not subject to stress while being cleaned.

### DETAILED EXPLANATION OF THE INVENTION

The invention consists of an automatic machine for hydromassaging pet animals comprising a frame (2) that houses in its interior a cleaning cabin (1) into which the pet to be washed is introduced, with an assembly of nozzles (3) distributed all over the entire cabin (1), from which nozzles (3) water and shampoo are sprayed at a predetermined and controlled temperature. Said nozzles (3) are used for performing a hidromassage that washes the animal with a pressure that is controlled by a pressure gauge (45).

The base of the cabin (1) is inclined for collecting the water in a tank (4). In this manner it is formed a small-sized reservoir for recycling water for the most part of the washing phase, thereby reducing water consumption.

At the lower portion of the one of the sides of the cabin (1) there is provided a ventilating duct (5) from which hot air coming from a turbine (6) is ejected, said air serving to drying the underbelly of the animal, which would not become adequately dried should the air come from above.

At the lower portion of the cabin (1) and on the side opposite the above, there is provided another ventilating duct (9) intended to permit the hot air coming from the three turbines (6, 7 and 8) to be evacuated through said exit and to be collected again by said turbines (6, 7 and 8), thereby a continuous cycle of air circulation in the entire cabin (1) being created.

There are located in the same ventilating duct (9) electric resistances (10) that heat up the air as it circulates. Temperature control is carried out by a thermal gauge (11) placed in turbine (8) that indicates whether or not the electric resistances (10) have to start working.

The two drying turbines (7 and 8) collect the air coming from the inside of the cabin upon passage through the resistances (10) and force said air back downwards into the inside of the cabin, while the third drying turbine (6) that drives the air downwards through the ventilating duct (5), forces it underneath the gratings (12), with the air moving downwardly.

The animals remain on nonskid perforated gratings (12) so that the hydromassaging water and the drying air can pass through them.

At upper portion of the cabin (1) there are provided outlets having gratings (13) from which the drying air coming from the two turbines (7 and 8) is evacuated.

The upper portion is further provided with a lighting device (14) for suitably see the interior of the cabin (1) during all the operations.

At the front portion there is a door provided with a big-sized transparent window (15) for the entrance and the exit of the animals, that besides permits both the pet to see the exterior for the sake of keeping it calm and the master or professional to monitor at all times the interior of the cabin (1) in order to check the condition of the pet.

The window opening and closing control (15) is provided with a safety sensor (16) that only permits operation of the machine when the door is closed.

As shown in the appended drawings, the frame or casing (2) accommodates all the components necessary for the operation of the equipment.

Said frame (2) contains a water reservoir (24) provided with electric resistances (25) for heating up and keep the water at a programmed temperature. Said reservoir (24) has a temperature gauge (26) that sends a signal to a control microprocessor (44) located within the electric cabinet (27) and that, by means of the temperature programming that is indicated on the water and air programmers (28), gives the signal to initiate the washing operation or otherwise to prevent the washing phase from starting.

In this manner the machine of the invention can autonomously consume water coming from the reservoir (24), not permitting entry of water until the washing phases have ended, thereby avoiding temperature changes of said washing water and guaranteeing that temperatures will never vary during the processes.

Level buoys (29) permit entry of water through an electro-valve (30) only when the machine is not going to use any more water, that is to say, when the drying phase starts. There is provided a connection (31) for manually emptying the reservoir (24) that is used during transportation or whenever it is necessary to empty the reservoir (24).

A great flow discharge pump (32) carries the water through the collector (33) from the reservoir (24) or from a recirculation outlet (17) of the tank (4) to the hidromassaging nozzles (2).

Two motor-driven electro-valves (34) are responsible for changing the water coming from the reservoir (24) to the tank (4) water for recycling. It is used two shampoo dosing pumps (35), depending on the washing program that the machine of the invention is to complete at user's will, which dosing pumps (35) draw the shampoo from respective containers (36).

At the lower portion of the cabin there is provided the water recirculation outlet (17) that is connected to the recirculation filter (18). There is another outlet (19) to the water-emptying pump (23) upon passage through the discharge filter (20), said outlet (19) being connected to the sewer system; and there is provided another outlet (21) which corresponds to an overflow should there be too much water. Emptying of the tank is controlled by a level buoy (22) that indicates when the water-emptying pump (23) is to start the emptying operation of said tank.

Filters (18 and 20) are filters made of wire mesh for preventing residues or animal hairs from going to the discharge pump (32) or the waste (41).

The water-emptying pump (23) is responsible for emptying the tank (4) once the appropriate sequences have ended or when so indicated by the emptying level buoy (22) of the tank (4).

The electric cabinet (27) is provided with a control microprocessor (44), for instance of the PLC type, that controls the functions and security levels of the equipment.

Two temperature controllers (28) installed on the front of the electric cabinet (27) are responsible for regulating water and air temperatures. Such controllers (28) along with the control microprocessor (44) are programmed to keep the machine from start working when either the water temperature of the reservoir (24) or the drying air from the turbines (6, 7 and 8) is not the one that has actually been programmed.

At the front portion of the frame (2) there is provided the aforementioned window (15) for entrance and exit of the animals with the corresponding door opening safety sensor (16).

It is used a touch-sensitive screen (37) for introducing the necessary programs, the control over the completed washing operations, malfunction indications, meters, etc.

The machine of the invention is provided with an emergency stop pushbutton (38) that shuts down the machine at any time.

The cabin is ready for operating self-service by accepting conventional means of payment, for which it is only necessary to install a suitable charging module, of the type known in this field of business.

At the rear portion of the frame (2) there are water intake connections (39), power outlet connections (40) and discharge (41) and overflow (43) connections from the overflow pipe (21).

There are provided two doors for accessing the reservoir (24), the tank (4), the filters (18 and 20), the turbines (6, 7 and 8), etc. On the right side of the frame (2) is the access door to the assembly of the discharge pump (32), the electric cabinet (27), the electro-valves (34), the water-emptying pump (23) and all the remaining elements.

The machine of invention can have four wheels (42) for effortless displacement within any facilities where said machine is located.

### AND ACTUAL EMBODIMENT

Whenever the machine is operative all the possible programs are displayed on the touch-sensitive screen (37). If it were not operative, it would be displayed on the machine screen (37) the reason why that is so, like for instance "inadequate water temperature" or "emptying tank", etc. In those cases it is provided that the machine cannot start as a security measure.

There are provided, for instance, different types of programs from which to select the most suitable required function:
- Cleaning and short drying program
- Cleaning and long drying program
- Rinsing program
- Short drying program
- Long drying program
- Cabin disinfection

Upon selection of one of the programs, the hydromassaging cabin (1) becomes lighted up and it is indicated on the screen (37), without the pet being inside, that the user is to select the cabin (1) disinfection option.

Once the cabin (1) is disinfected, it is displayed on the screen (37) that the pet can be introduced therein and upon locking of the access window (15) it is displayed on said screen (37) press to start.

It is then when the hidromassaging phase begins with the ejection from the nozzles (3) of water and shampoo streams at a temperature of 35°C that both relax and wash the animal.

After the washing phase, it takes some time for the shampoo to work on the hair and skin of the animal, which period of time is used by the machine for emptying the tank (4).

After that, the rinsing phase starts also with hot water at 35°C in order to eliminate the remaining shampoo.

Between the rinsing and the drying phase there is a short period of time used for emptying the tank (4) and heating up the drying electric resistances (10) in order that said tank (4) can already be at the temperature of 35°C when the drying starts.

When the drying phase starts it is firstly the turbines (7 and 8) that go into action so as to drive the air downwards and after approximately 5 minutes the third turbine (6) starts operating, said turbine (6) causing, through the ventilating duct (5), the air to flow upwardly, thereby drying the underbelly of the animal.

The mode of operation and the air streams created within the cabin that recirculate the air for minimizing consumption of electric power creates, additionally, a soothing feeling for the animal since it receives air that is distributed over its entire body.

Once the drying is finished, the machine stops and the animal can be removed already dry and clean.

At all times the touch-sensitive screen (37) provides the user with information on the phase that is taking place, the remaining time of operation in said phase and the total time remaining until the end of the operation.

It is understood that in the present case any changes regarding details of construction may be resorted to provided they do not alter or modify the gist of the invention.

## Claims

**1.** AUTOMATIC MACHINE FOR HYDROMASSAGING PET ANIMALS, of the type that is provided with a cabin into which the animal is introduced, said machine using both cleaning devices with water and detergent and drying devices, **CHARACTERIZED in that** it comprises:
- a frame (2) that accommodates a cabin (1) into which the animal to be cleaned is placed, with a floor formed by an anti-slip grating (12) and an inclined bottom that creates a tank (4) for recycling water
- said cabin (1) having nozzles (3) distributed all over the surface of said cabin (1) from which nozzles (3) water a shampoo are ejected at a controlled temperature and pressure
- said cabin (1) having ventilating duct (5) located at the lower portion of one of its sides and another ventilating duct (12) at the opposite side and at the lower portion of said cabin (1); said cabin (1) further having at the upper portion thereof grated apertures (13), said ducts (5 and 12) and said apertures (13) permitting the existence of a drying air flow all over the entire cabin (1) at a controlled temperature
- said machine having means for autonomous consumption of tempered water and for recirculation of said water after having been used during the washing
- said frame (2) accommodating an electric cabinet (27) having a control microprocessor (44), for instance of the type PLC, that regulates the operation of the machine
- said machine having a touch-sensitive screen (37) and means for data entry by the user, who selects between the different washing programs offered.
- said frame also accommodating all those components, elements, connections and fluid intakes for the operation of the equipment.

**2.** AUTOMATIC MACHINE FOR HYDROMASSAGING PET ANIMALS, according to the previous claim, **CHARACTERIZED in that** said means for recirculation and autonomous water consumption consists **in that** said tank (4) has a recirculation outlet (17) that, upon passage through a recirculation filter (18) and a great flow discharge pump (32), collects said water from a collector (33) along with tempered water from a water reservoir (24), said water reservoir (24) being provided with electric resistances (25) and a temperature gauge (26), for supplying said water to said hydromassaging nozzles (3); there being provided motor-driven electro-valves (34) that renew the water in said tank (4) with water coming from said reservoir (24).

**3.** AUTOMATIC MACHINE FOR HYDROMASSAGING PET ANIMALS, according to the previous claims, **CHARACTERIZED in that** the air received from said dryers (6, 7 and 8) is heated up by electric resistances (10) pursuant to the indications from a thermal sensor (11).

**4.** AUTOMATIC MACHINE FOR HYDROMASSAGING PET ANIMALS, according to the previous claims, **CHARACTERIZED in that** it is used a pressure gauge (45) for controlling the pressure with which the water and the detergent coming from the nozzles (3) is ejected.

**5.** AUTOMATIC MACHINE FOR HYDROMASSAGING PET ANIMALS, according to the previous claims, **CHARACTERIZED in that** said tank (4) is provided with an outlet (19) for the water-emptying pump, said water being channelled to the sewer system upon passage thereof through a discharge filter (20) and upon being driven by a water-emptying pump (23); there being provided a level buoy (22) that controls when said tank (4) is to be emptied.

**6.** AUTOMATIC MACHINE FOR HYDROMASSAGING PET ANIMALS, according to the previous claims, **CHARACTERIZED in that** said tank (4) is provided with a water overflow pipe (21).

**7.** AUTOMATIC MACHINE FOR HYDROMASSAGING PET ANIMALS, according to the previous claims, **CHARACTERIZED in that** said water reservoir (24) is provided with electric resistances (25) for tempering water pursuant to the instructions coming from a thermal gauge (26); and a level buoy (29) is used by a water-filling electro-valve (30) of said water reservoir (24); there being provided a connection (31) for manually emptying said water reservoir (24).

**8.** AUTOMATIC MACHINE FOR HYDROMASSAGING PET ANIMALS, according to the previous claims, **CHARACTERIZED in that** it is provided with two dosing pumps (35) that draw said shampoo from containers (36).

**5.** AUTOMATIC MACHINE FOR HYDROMASSAGING PET ANIMALS, according to the previous claims, **CHARACTERIZED in that** said filters (18 and 20) are two filters made of wire mesh.

**10.** AUTOMATIC MACHINE FOR HYDROMASSAGING PET ANIMALS, according to the previous claims, **CHARACTERIZED in that** it is provided with two temperature controllers (28) that receive information from said thermal air (10) and water (26) sensors, which sensors regulate the start and stop of the machine only in the programmed conditions by means of said control microprocessor (44).

**11.** AUTOMATIC MACHINE FOR HYDROMASSAGING PET ANIMALS, according to the previous claims, **CHARACTERIZED in that** the door (15) to said cabin (1) is provided with a big-sized transparent window and a door (15) closing sensor (16).

**12.** AUTOMATIC MACHINE FOR HYDROMASSAGING PET ANIMALS, according to the previous claims, **CHARACTERIZED in that** there are provided means for lighting up said cabin (1).

**13.** AUTOMATIC MACHINE FOR HYDROMASSAGING PET ANIMALS, according to the previous claims, **CHARACTERIZED in that** it is provided with an emergency stop pushbutton (38) that stops the operation of the machine at any moment.

**14.** AUTOMATIC MACHINE FOR HYDROMASSAGING PET ANIMALS, according to the previous claims, **CHARACTERIZED in that** in said frame (2) are the shampoo containers (36), the water intake connections (39), power outlet connections (40), the discharge (41) connections, and access doors to the different areas of said machine, such as, said reservoir (24), the tank (4) and filters (18, 20) and turbines (6, 7 and 8), or to the assembly formed by the discharge pump (32), the electric cabinet (27), the electro-valves (34) and the remaining elements.

**15.** AUTOMATIC MACHINE FOR HYDROMASSAGING PET ANIMALS, according to the previous claims, **CHARACTERIZED in that** it is provided with means for charging that can be of any known type.

**15.** AUTOMATIC MACHINE FOR HYDROMASSAGING PET ANIMALS, according to the previous claims, **CHARACTERIZED in that** said frame (2) of said machine is provided with wheels (42) at the lower portion thereof for facilitating displacement.
